Europäisches Patentamt

European Patent Office

Office européen des brevets

(11) Publication number: **0 001 509**
**B1**

# EUROPEAN PATENT SPECIFICATION

(45) Date of publication of patent specification: **04.08.82**

(21) Application number: **78300463.3**

(22) Date of filing: **05.10.78**

(51) Int. Cl.³: **H 01 C 7/00,** G 01 N 27/12
//H01C7/04

(54) Variably resistive gas sensor and method of fabrication.

(30) Priority: **05.10.77 US 839701**

(43) Date of publication of application:
**18.04.79 Bulletin 79/8**

(45) Publication of the grant of the patent:
**04.08.82 Bulletin 82/31**

(84) Designated Contracting States:
**BE DE FR GB NL SE**

(56) References cited:
FR - A - 2 172 441
GB - A - 1 437 075
US - A - 3 893 230
US - A - 4 011 655

(73) Proprietor: **FORD MOTOR COMPANY LIMITED
Eagle Way
Brentwood Essex CM13 3BW (GB)**
(84) **GB**
(73) Proprietor: **FORD-WERKE AKTIENGESELLSCHAFT
Ottoplatz 2 Postfach 21 03 69
D-5000 Köln 21 (DE)**
(84) **DE**
(73) Proprietor: **FORD FRANCE SOCIETE ANONYME
344 Avenue Napoléon Bonaparte B.P. 307
F-92506 Rueil Malmaison Cedex (FR)**
(84) **FR**
(73) Proprietor: **Ford Motor Company
Dearborn County of Wayne Michigan (US)**
(84) **BE NL SE**

(72) Inventor: **Esper, Michael Joseph
11690 Riverdale
Redford Township, Michigan 48239 (US)**
Inventor: **Wells, Leo Green
28677 Leona Street
Garden City, Michigan (US)**
Inventor: **Merchant, Stanley Richard
30001 Leona Street
Garden City, Michigan (US)**

(74) Representative: **Drakeford, Robert William et al,
15/448 Research & Engineering Centre
Laindon Basildon Essex SS15 6EE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Variably resistive gas sensor and method of fabrication

This invention relates to variably resistive materials suitable for use as gas sensors.

It has been determined that the operation of a conventional automotive internal combustion engine produces substantial quantities of deleterious gaseous combustion by-products. The principal pollutants so produced are hydrocarbons, carbon monoxide and various oxides of nitrogen. Extensive investigation into the combustion process, examination of alternative combustion processes and detailed studies of exhaust gas treatment devices have led to the conclusion that the use of a catalytic converter within the exhaust system of an otherwise substantially conventional internal combustion engine provides a practical and effective technique for substantially reducing the emission of the deleterious gaseous combustion by-products into the atmosphere.

A catalytic exhaust gas treatment device or converter which is capable of substantially simultaneously converting all three of the aforementioned principal pollutants into water, carbon dioxide and gaseous nitrogen is referred to as a "three-way catalyst". However, for the known three-way catalyst devices to be most effective, the gaseous by-products introduced into the converter must be the by-products of combustion of a substantially stoichiometric air/fuel mixture. Such three-way catalysts are said to have a very narrow "window" of air/fuel ratios at which the device is most efficiently operative on the three principal pollutants. By way of example, $\lambda$ is the air/fuel ratio of the combustion mixture being provided to the engine, normalized to stoichiometry, the window may extend from about 0.99$\lambda$ to about 1.01$\lambda$. Such a three-way catalyst converter is described, for example, in United States Letters Patent 3,895,093 issued to Weidenback et al. on July 15, 1975, assigned to Kali-Chemie Aktiengesellschaft and titled "Catalytic Removal of Carbon Monoxide Unburned Hydrocarbons and Nitrogen Oxides from Automotive Exhaust Gas". For air/fuel ratios of the combustion mixture on either side of the window, one or two of the principal pollutants will be "converted" in only very small percentages. Within the window, the three principal pollutants will be converted at very high percentage efficiencies approaching 90% in some cases. In view of the narrowness of the catalytic converter window, it has been determined that the associated internal combustion engine must be operated with a combustible mixture having an air/fuel ratio maintained as closely as possible to stoichiometry under all or virtually all engine operating conditions.

The most satisfactory technique for assuring continuous or substantially continuous operation of the associated engine at the optimum air/fuel ratio is through the utilization of an appropriate feedback control mechanism. In implementing suitable feedback control systems, it has been proposed to employ sensors responsive to the chemistry of the exhaust gases, that is, the heated gaseous combustion by-products, in order to control the precise air content and/or fuel content of the air/fuel mixture being provided to the engine.

One form of exhaust gas sensor which has received attention in recent years is the electrochemical form of sensor. One type of electrochemical exhaust gas sensor which has demonstrated excellent performance, life and reasonably low manufacturing cost capability is the form of exhaust gas sensor which employs a ceramic material which demonstrates a predictable electrical resistance change when the partial pressure of oxygen of its environment changes. An example of such a material is titania (titanium dioxide having a general formula $TiO_2$). Such sensors can be fabricated generally in accordance with the teachings of United States Patent No. 3,886,785 issued to Stadler et al., entitled "Gas Sensor and Method of Manufacture". Tests of such devices have shown that at elevated and substantially constant temperatures, the devices will demonstrate a virtual step change in resistance for rich-to-lean and lean-to-rich excursions of the air/fuel ratio of the combustion mixture producing the exhaust gas environment of the sensor.

One difficulty which has been encountered with sensors of this general type is a noticeable increase in the response time of the sensor to excursions from stoichiometry of the air/fuel ratio of the combustion mixture being provided to the internal combustion engine at exhaust gas temperatures at the lower portion of the normal operating temperature range. In the application of such a sensor to a feedback control mechanism for maintaining the combustible mixture at a selected air/fuel ratio an undesired delay or lag time of the sensor in responsing to changes in the air/fuel ratio can permit off-ratio operation of the associated engine to occur for a period of time sufficient to cause substantial quantities of exhaust gas pollutants to pass through the catalytic converter without the desired catalytic treatment and conversion.

According to the present invention, there is provided a gas sensor comprising a porous body composed of grains of ceramic material having an electrical resistance which varies with oxygen pressure characterised in that particles of a catalytic agent of a size smaller than the grains of the ceramic material are deposited discontinuously throughout the body on the surfaces of individual grains of the ceramic material.

We have determined that the addition of a catalyst agent, for example, a combustion catalyst such as platinum or a platinum alloy, to the exhaust gas sensor will materially improve the response time of the sensor to off-ratio excursions of the combustible mixture at the lower portion of the range of normal exhaust gas temperatures. The use of a catalyst agent may cause or induce localized heating of the exhaust gas sensor ceramic in the presence of a combustible pollutant, i.e., hydrocarbons. It is also possible that the presence of a metallic body in close proximity to the ceramic grains acts as a convenient source of "free" electrons to facilitate disassociation of the exhaust gas constituent molecules into ions and migration of the ions into the ceramic body to thereby alter its resistance. Thus, for exhaust gases having temperatures within the lower portion of the operating range of exhaust gas temperatures generated by the associated internal combustion engine, the addition of a catalyst agent to the exhaust gas sensor is believed to elevate the temperature of the sensor sufficiently to result in substantial reduction of the low temperature response time lag.

The use of catalytic agents generally in association with exhaust gas sensors, however for other purposes, is well known. For example, United States Letters Patent 3,645,875 titled "Electrode Assembly" and issued on February 29, 1972 in the names of R. G. H. Record et al. describes the use of platinum catalyst material as an electroded surface on zirconia material used as a partial pressure of oxygen responsive sensor. According to that patent, the use of platinum is desirable for an ability to bond to a layer of refractory material and because the electrode must be exposed to gases or liquid at extremely high temperatures. Nevertheless, Record et al. specify that their electrode layer be protected by an overlayer of porous ceramic.

A zirconia ceramic exhaust gas sensor is known to generate a voltage differential between pairs of surfaces when the surfaces are exposed to gases having different partial pressures of oxygen. In an exhaust gas sensor, one of these gases would be the atmosphere and is used to establish a reference. In order for the generated voltage to be useful, the surfaces should be provided with porous electrode layers. Platinum is useful as such an electrode layer because it is not reactive with the exhaust gas environment and because it can withstand the elevated temperatures, normally encountered in such an environment.

The use of a platinum electroded surface on a variably resistive exhaust gas responsive ceramic such as titania would be detrimental since a variably resistive ceramic operates in response to partial pressure of oxygen to change its resistance and an electroded surface could readily constitute a short circuit bypassing the device. Furthermore, sufficient quantities of platinum to coat a surface of a ceramic device would add substantially to the fabrication costs of the device. Variably resistive exhaust gas sensor devices find their attractiveness as partial pressure of oxygen responsive materials in that the devices are relatively inexpensive to fabricate and do not need to be provided with a reference gas source. Furthermore, as set forth in the noted Record et al. patent, the platinum electroded surface of the zirconia must be provided with an overlayer of ceramic in order to protect the platinum surface from degradation caused by the exhaust gas stream per se.

United States Letters Patent 3,865,550, titled "Semiconducting Gas Sensitive Devices" and issued on February 11, 1975 in the names of Bott et al. describes a partial pressure of oxygen responsive ceramic material comprising a semiconducting oxide of a first metal having within its lattice structure at least one further metal whereby the system is activated by being caused to contain a higher concentration of at least one metallic ionic species than the unactivated semiconducting oxide. As an example of the further metal, Bott et al. suggest that the lower valency or oxidation state of transition metals, in particular platinum, favour the absorption of reducing gases such as hydrocarbons. The addition of a further metal to the lattice structure of the semiconducting ceramic material, i.e., at the atomic level, poses great difficulty in terms of manufacturing processes. Furthermore, the existence of platinum metal within the lattice structure of the ceramic on the atomic level, i.e., within the individual grains of ceramic material, would be of little utility in promoting rapid disassociation of exhaust gas molecules and rapid migration of oxygen ions to provide response time periods consonant with the rapid response time desired for operation of the device as an input signal generator for a feedback fuel control system.

French patent specification No: 2,172,441 discloses an exhaust gas sensor which has two elements the resistances of which both vary with temperature but which are inert to changes in the partial pressure of oxygen. One element carries a catalyst which causes oxidation of combustible exhaust gas products with a consequent increase in temperature of that element relative to the other. The differences in resistances of the two sensors caused by their temperature differences is used to generate a signal indicative of the amount of combustible gas present.

By contrast, the present invention provides a porous, variable resistive, partial pressure of oxygen responsive ceramic device formed of a large plurality of substantially uniformly sized particles of ceramic material which are interbonded by sintering along their mutual contact zones or points, and to which has been added relatively much smaller particles or deposits of catalytic agent or material. Any of the conventional combustion catalysts used as vehicle exhaust catalysts, such as platinum or an alloy thereof, may be used. The particles of catalytic agent or material are situated on, and sintered to, individual grains of the ceramic material. Ideally, each grain or particle of the ceramic material will have bonded to it at least one and preferably a plurality of individual particles or deposits of the catalytic agent or material.

In order to achieve the desired intimate association between particles or deposits of the catalytic agent or material and individual grains of the ceramic material, a matured porous sensor ceramic body is preferably immersed within a liquid solution which includes a substance capable of forming the desired catalytic agent or material and which may be processed to produce deposits or particles of the catalytic agent or material on the surface of individual grains of the matured ceramic. After the solution has been permitted to penetrate the pore of the matured ceramic body, the matured ceramic body is removed from the solution and allowed to dry. The matured ceramic body is then fired to assure conversion of the deposits of the solution to form the desired catalytic agent or material and to sinter the catalytic agent or material to the ceramic grains.

An embodiment of the invention will now be described, by way of example only, with reference to the drawings, in which:

Figure 1 illustrates an exhaust gas sensor construction including a partial pressure of oxygen responsive ceramic chip element fabricated in accordance with the teachings of the present invention;

Figure 2 is a photomicrograph of an exhaust gas sensor ceramic material fabricated in accordance with the teachings of the present invention;

Figure 3 is a scanning photomicrograph of a cross-section of an exhaust gas sensor construction fabricated in accordance with the teachings of the present invention and sensitized to identify platinum sites.

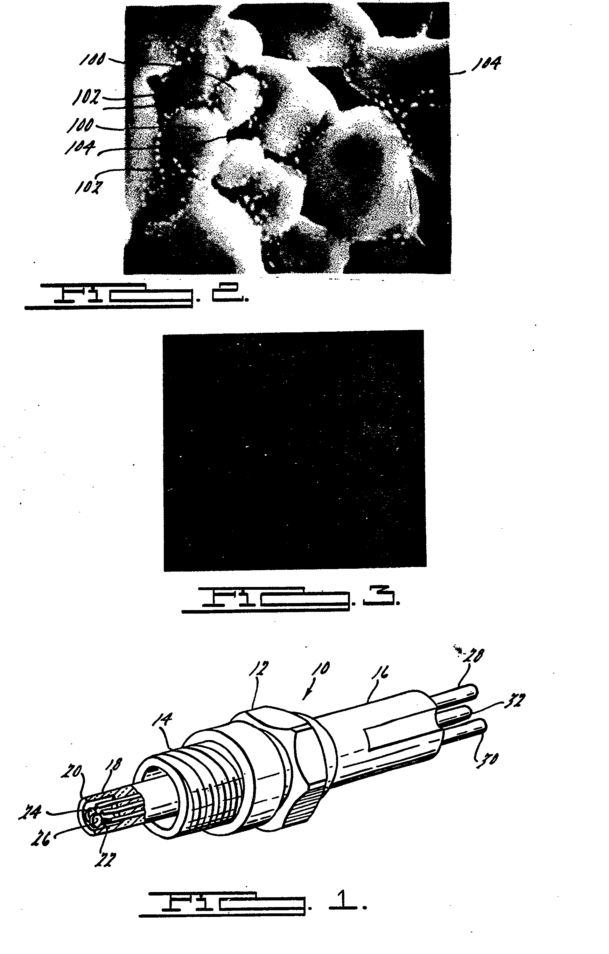

Referring now to the drawing wherein like numbers designate like structure through the various views thereof, an exhaust gas sensor 10 is shown in Figure 1. Exhaust gas sensor 10 is provided with a housing means 12 which is threaded as at 14 for engagement with a suitably threaded aperture provided therefor within the exhaust system not shown of an internal combustion engine also not shown. Ceramic insulator 16 extends through housing means 12 and includes a forwardly projecting sensor support portion 18. Sensor support portion 18 includes forwardly projecting collar 20 which defines a well or cavity 22. The sensor 12 includes a pair of ceramic sensor elements or members 24, 26 received within well 22. Three electrical terminal members 28, 30, 32 extend rearwardly from ceramic insulator member 16. Electrical terminal members 28, 30, 32 are adapted for receipt of suitable mating connectors, not shown, to electrically communicate exhaust gas sensor 10 with a utilization means not shown. Such a sensor is described and claimed in our co-pending European patent application no. 78300464.1, published as no. 1510.

The utilization means, for example, may be an air/fuel ratio modulator means adapted to controllably modulate the fuel content, or the air content, or both, of the combustion mixture being provided to an internal combustion engine or to another combustion device such as a furnace.

The exhaust gas sensor 10 illustrated in Figure 1 is shown to include a pair of ceramic sensing selements, 24, 26. As described in our co-pending European patent application no. 78300466.6, published as no. 1512, sensor element 24 may be considered to be a high temperature thermistor while ceramic sensor element 26 is a partial pressure of oxygen responsive ceramic element according to our invention.

In fabricating partial pressure of oxygen responsive element 26 a substantially pure, preferably titania, powder is prepared. As titania has two phases, the anatase phase and the rutile phase, and the rutile phase is the high temperature stable phase, the titania powder should be comprised of a substantial majority of rutile phase material. In order to convert the anatase phase material to rutile phase material, the titania material may be calcined, for example for two hours at 2100°F (1150°C), and then balled milled to produce powder having small particle sizes with the majority of the powder being rutile phase material. Calcining also improves the purity of the powder by volatilizing any volatilizable impurities. The powder should have 100% of the particles smaller in size than 20 microns and should have a substantial majority of the powder with a particle size smaller than about 10 microns. The processed powders may then be ball milled with an organic binder solution to form a slurry. The slurry may thereafter be cast, formed onto a tape or sheet of material such as cellulose acetate or polytetrafluoroethylene (PTFE) after which the slurry may be air dried, to form a sheet or tape of material. Suitably sized and shaped sensor element wafers of the air dried material may then be cut from the tape for further processing. A pair of lead wires may be inserted into the sensor element and the sensor element may thereafter be sintered.

Such processing will produce a titania partial pressure of oxygen responsive ceramic element having a degree of porosity consonant with rapid transport of gases throughout the element for intimate contact with individual grains of the ceramic material. After the sensor elements have been so matured, the matured ceramic elements may then be impregnated with a solution including a catalytic agent or material forming substance. Our presently preferred solution is a 1:1 solution of 5% chloroplatinic acid and formaldehyde with metallic platinum being the preferred catalytic agent or material.

Impregnation of the matured ceramic sensor element in order to achieve the impregnated sensor element according to the instant invention may be accomplished by immersing the sensor element in the 1:1 solution and evacuating the container to remove entrapped air. The solution is urged and allowed to flow through the porous sensor element so that substantially all interior sensor granular surfaces are exposed to the solution. The impregnated element is then air dried and heated in air to a temperature of approximately 1650°F (900°C) for a period of approximately six (6) hours. This heating will sinter the platinum particles to the associated titania grains within the sensor ceramic. The heating step will also cause reduction of any deposited chloroplatinate salts to finely divided particles of metallic platinum.

In a second process, a 1:1 solution of 2% chloroplatinic acid and formaldehyde is used. With this solution, the step of heating in air may be accomplished at a lower temperature of about 1300°F (700°C) for a shorter period of time of approximately four (4) hours. It will be appreciated that various strength solutions of catalytic agent forming material may be used and that these different strength solutions will result in deposits of salts which will reduce at different time temperature combinations. Reduction at higher temperature and/or for longer periods of time may improve the sinter bond between the ceramic grains and the catalytic agent or material. Additionally, use of a different catalytic agent or material will require that the immersion step be carried out in a liquid solution which will result in deposition of a substance which, upon further processing, will form the desired catalytic agent or material.

In order to be assured that the catalytic agent or material appears as finely divided particles and is substantially uniformly distributed on the surface of the ceramic grains throughout the sensor ceramic, the catalytic agent or material is preferably applied as a liquid solution. This provides for the desired finely divided particles, the substantially uniform distribution and assures penetrating throughout the sensor ceramic. The matured sensor ceramic material may be immersed in the liquid solution for a period of time sufficient to allow the solution to flow throughout the sensor ceramic material. Since the conventional and preferred catalytic materials are not readily formed into liquid solutions, an acid comprised of, inter alia, a substance capable of forming the catalytic agent or material is used. In order to readily disassociate the acid to generate salts of the catalytic agent or material, a reducing agent such as formaldehyde or hydrazine is used in combination with the acid. In the event that use of a reducing agent such as formaldehyde or hydrazine are undesirable, a chloroplatanate acid solution may be used. In such an instance, the ceramic, when air dried after removal from the solution, will have deposited on the grain surfaces salts of platinum chloride. In order to remove the chloride from the deposited salts further processing would be required. This further processing could include substitution of another chemical element for the chloride component of the salt, removal of the chloride and removal of the substitute component. Thereafter the ceramic material could be further processed by heating in air to assure reduction of the platinum and to sinter the platinum particles to the individual ceramic grains.

Referring now to Figure 2, a photomicrograph illustrating an exhaust gas sensor construction according to the present invention is shown. The photomicrograph of Figure 2 is enlarged by a factor of 7000 diameters. Figure 2 illustrates a plurality of grains of the variably resistive sensor ceramic material, titania, as at 100, which grains are interbonded by sintering at or along mutual contact points or zones between adjacent grains. A plurality of substantially smaller particles as at 102 are shown accumulated on the surface of grains 100 in proximity to intergranial boundaries. The particles appearing at 102 have been verified by microprobe analysis to be particles of catalytic material, in this instance, platinum, which has been applied to the exhaust gas sensor by the method set forth hereinabove. It will be observed that, with reference to Figure 2, the deposits of catalytic agent or material tend to be concentrated, on any one grain, in close proximity to intergranial boundaries. We believe that this contributes to an ability of the deposited material to withstand abrasion and this contributes to a longer useful life of the exhaust gas sensor in service. We believe that this tendency to form deposits in proximity to the intergranial boundaries is a consequence of immersion of the matured ceramic into a liquid solution containing a substance which forms or may be processed to form the desired deposits of catalytic agent or material. It will be observed also with reference to Figure 2 that a substantial number of voids as at 104 are present between adjacent grains 100. These voids are beneficial in a variably resistive exhaust gas sensor to provide for rapid communication of exhaust gases to the surface of the individual grains throughout the ceramic.

Referring now to Figure 3, a scanning photomicrograph, at a magnification of 700 diameters is shown. This photomicrograph shows a plurality of light spots. These light spots are caused by reflected radiation of a wave length intended to be reflected by incidence upon a platinum particle. While some of these light spots could be scattered radiation produced by other causes, a substantial majority of these light spots indicate the location of a platinum particle at the site indicated. The dark edge appearing at the right of the photomicrograph indicates the surface of the exhaust gas sensor specimen while the left edge of the photomicrograph corresponds to the opposite surface of the specimen. The presence of a substantial uniformity of reflected radiation throughout the entire thickness of the exhaust gas sensor specimen indicates that the impregnation process has been successful to a high degree in providing platinum particles distributed substantially uniformly throughout substantially the entire thickness of the sensor ceramic.

The exhaust gas sensor is thus comprised of a plurality of grains of ceramic material, preferably having a mean particle size of from 5 to 7 microns, processed to achieve a high degree of porosity and is provided with deposits of a catalytic agent or material on the surfaces of a substantial majority of the individual grains of ceramic. The deposits, which preferably have a mean particle size of 1 micron or less, tend to form in proximity to intergranial boundaries where the catalytic agent or material may be less subject to abrasion from contact with solid particles in the exhaust gas stream. The resultant sensor therefore is expected to demonstrate substantially increased useful life in service.

The sensor has a good response time at low temperatures, and is durable at high temperatures.

**Claims**

1. A gas sensor comprising a porous body composed of grains of ceramic material having an electrical resistance which varies with oxygen pressure characterised in that particles of a catalytic agent of a size smaller than the grains of the ceramic material are deposited discontinuously throughout the body on the surfaces of individual grains of the ceramic material.

2. A sensor according to Claim 1 characterised in that a substantial majority of the particles of catalytic agent are deposited in proximity to intergranular boundaries of the ceramic material.

3. A sensor according to Claim 1 characterised in that the particles of catalytic agent are substantially uniformly distributed throughout the porous body.

4. A sensor according to any one of Claims 1 to 3 wherein the mean particle size of the particles of catalytic agent is smaller than one micron.

5. A sensor according to any one of Claims 1 to 4 characterised in that the catalytic agent comprises platinum or an alloy of platinum.

6. A sensor according to any one of Claims 1 to 5 further comprising two electrical leads embedded in mutually non-contacting relationship in the porous body.

7. An exhaust gas sensing device for an engine exhaust system comprising a housing adapted to be mounted in the engine exhaust system and a sensor according to Claim 6 supported in the housing for location in the exhaust gases passing through the exhaust system.

8. A device according to Claim 7 wherein a ceramic insulator having a forwardly-projecting sensor portion, and a rearwardly-extending terminal portion is mounted in the housing, the sensor portion defining an open cavity within which the sensor is received, said cavity having a depth sufficient to shield the sensor from the flow of gaseous combustion products in the exhaust system, and passages extend rearwardly from the cavity within the ceramic insulator to the terminal portion, the electrical leads from the sensor being received in respective ones of the passages.

9. A method of preparing a gas sensor according to Claim 1, comprising the steps of forming a porous body comprised of individual grains of ceramic material having an electrical resistance which varies with partial pressure of oxygen; immersing the ceramic body in a liquid solution of catalytic agent; causing the liquid to substantially penetrate and flow through the porous body; heating the liquid impregnated porous ceramic body to an elevated temperature for a period of time sufficient to deposit discontinuously particles of the catalytic agent of a size smaller than the grains of the ceramic material on the grains of the ceramic material and to sinter the deposits on to the grains of the ceramic without causing further sintering of the ceramic grains.

10. A method according to Claim 9 wherein the liquid impregnated ceramic body is heated to a temperature of from about 1300°F (700°C) to about 1650°F (900°C) and maintaining said elevated temperature for a period of time of from about four to six hours.

**Patentansprüche**

1. Gasmessfühler, bestehend aus einem porösen Körper aus Keramikkörnern mit einem elektrischen Widerstand, der sich mit dem Sauerstoffdruck ändert, dadurch gekennzeichnet, dass Teilchen eines katalytischen Agens, die kleiner sind als die Keramikkörner, durch den Körper hindurch auf den Oberflächen der einzelnen Keramikkörner diskontinuierlich abgeschieden sind.

2. Messfühler nach Anspruch 1, dadurch gekennzeichnet, dass der wesentlich grössere Teil der Teilchen des katalytischen Agens nahe den Korngrenzen des keramischen Materials abgeschieden sind.

3. Messfühler nach Anspruch 2, dadurch gekennzeichnet, dass die Teilchen des katalytischen Agens im wesentlichen gleichförmig durch den porösen Körper hindurch verteilt sind.

4. Messfühler nach einem der Ansprüche 1 bis 3, worin die durchschnittliche Teilchengrösse der Teilchen des katalytischen Agens kleiner als ein Mikron ist.

5. Messfühler nach einem der Ansprüche 1 bis 4, dadurch gekennzeichnet, dass als katalytisches Agens Platin oder eine Platinlegierung vorliegt.

6. Messfühler nach einem der Ansprüche 1 bis 5, welcher ferner zwei im porösen Körper ohne gegenseitige Kontaktbeziehung eingebettete elektrische Leitungen enthält.

7. Auspuffgasmessfühlervorrichtung für ein Motorauspuffsystem, bestehend aus einem im Motorauspuffsystem anzubringenden Gehäuse und einem Messfühler nach Anspruch 6, der im Gehäuse so abgestützt ist, dass er in den durch das Auspuffsystem strömenden Auspuffgasen liegt.

8. Vorrichtung nach Anspruch 7, worin ein keramischer Isolator mit einem nach vorne weisenden Messfühlerteil und einem sich nach hinten erstreckenden Endteil im Gehäuse gelagert ist, wobei der Messfühlerteil einen den Messfühler aufnehmenden offenen Hohlraum begrenzt, wobei besagter Hohlraum genügend tief ist, um den Messfühler von der Strömung der gasförmigen Verbrennungsprodukte im Auspuffsystem abzuschirmen, und Durchlässe vom Hohlraum innerhalb des keramischen Isolators zum Endteil verlaufen, wobei die elektrischen Leitungen vom Messfühler in den entsprechenden Durchlässen aufgenommen sind.

9. Verfahren zur Herstellung eines Gasmessfühlers nach Anspruch 1, welches darin besteht, dass man stufenweise einen porösen Körper aus einzelnen Keramikkörnern mit einem elektrischen Widerstand, der sich mit dem Sauerstoffpartialdruck ändert, bildet; den keramischen Körper in eine flüssige Lösung eines katalytischen Agens eintaucht; die Flüssigkeit den porösen Körper weitgehend durchdringen und durchströmen lässt; den mit der Flüssigkeit imprägnierten porösen keramischen Körper solange auf eine erhöhte Temperatur erhitzt, dass sich Teilchen des katalytischen Agens, die kleiner sind als die Keramikkörner, diskontinuierlich auf diesen abscheiden und darauf zusammensintern, ohne weiteres Sintern der Keramikkörner zu veranlassen.

10. Verfahren nach Anspruch 9, worin man den mit der Flüssigkeit imprägnierten Keramikkörper auf eine Temperatur von etwa 700°C bis etwa 900°C erhitzt und diese erhöhte Temperatur für einen Zeitraum von etwa vier bis sechs Stunden aufrechterhält.

**Revendications**

1. Détecteur de gaz comprenant un corps poreux formé de grains de matière céramique ayant une résistance électrique qui varie avec la pression de l'oxygène, caractérisé en ce que des particules d'un agent catalytique d'une granulométrie inférieure à celle des grains de la matière céramique sont déposées de manière discontinue dans la totalité du corps sur les surfaces de grains individuels de la matière céramique.

2. Détecteur suivant la revendication 1, caractérisé en ce qu'une majorité substantielle des particules d'agent catalytique est déposée à proximité des limites intergranulaires de la matière céramique.

3. Détecteur suivant la revendication 1, caractérisé en ce que les particules d'agent catalytique sont réparties en substance uniformément dans la totalité du corps poreux.

4. Détecteur suivant l'une quelconque des revendications 1 à 3, caractérisé en ce que la granulométrie moyenne des particules d'agent catalytique est inférieure à 1 micron.

5. Détecteur suivant l'une quelconque des revendications 1 à 4, caractérisé en ce que l'agent catalytique comprend du platine ou un alliage de platine.

6. Détecteur suivant l'une quelconque des revendications 1 à 5, caractérisé en ce qu'il comprend deux conducteurs électrique noyés dans le corps poreux dans une disposition de non contact réciproque.

7. Détecteur de gaz d'échappement pour un système d'échappement de moteur, caractérisé en ce qu'il comprend un corps propre être monté dans le système d'échappement du moteur et un détecteur suivant la revendication 6, monté dans le corps manière à pouvoir être placé dans les gaz d'échappement passant dans le système d'échappement.

8. Détecteur suivant la revendication 7, caractérisé en ce qu'un isolateur en matière céramique comportant une partie détectrice en saillie vers l'avant et une partie terminale s'étendant vers l'arrière est monté dans le corps, la partie détectrice délimitant une cavité ouverte dans laquelle le détecteur est reçu, cette cavité ayant une profondeur suffisante pour protéger le détecteur contre l'écoulement des produits de combustion gazeux dans le système d'échappement, et des passages s'étendent vers l'arrière à partir de la cavité dans l'isolateur en matière céramique, vers la partie terminale, les conducteurs électriques qui partent du détecteur étant reçus dans des passages respectifs.

9. Procédé de préparation d'un détecteur de gaz suivant la revendication 1, caractérisé en ce qu'on forme un corps poreux constitué de grains individuels de matière céramique ayant une résistance électrique qui varie avec la pression partielle de l'oxygène, on immerge le corps en matière céramique dans une solution liquide d'agent catalytique, on force le liquide à pénétrer en substance dans le corps poreux et à s'écouler au travers de celui-ci, on chauffe le corps en matière céramique poreuse imprégné de liquide à une température élevée pendant une période suffisante pour déposer de manière discontinue des particules de l'agent catalytique d'une granulométrie inférieure à celle des grains de la matière céramique sur les grains de la matière céramique et pour fritter les dépôts sur les grains de la matière céramique sans provoquer de frittage supplémentaire des grains

**0 001 509**

de matière céramique.

10. Procédé suivant la revendication 9, caractérisé en ce qu'on chauffe le corps en matière céramique imprégné jusqu'à une température d'environ 700°C à environ 900°C et on maintient la température élevée pendant une période d'environ 4 à 6 heures.

0 001 509

FIG. 2.

FIG. 3.

FIG. 1.

1